# EUROPÄISCHE PATENTSCHRIFT

(11) **EP 2 730 680 B1**
(45) Veröffentlichungstag und Bekanntmachung des Hinweises auf die Patenterteilung: **13.04.2016**
(21) Anmeldenummer: 12191737.1
(22) Anmeldetag: 08.11.2012
(51) Int. Cl.: C25B 9/04, C25B 9/10, H01M 8/02, C25B 11/02, C25B 9/06

(54) **Bipolarplatte für einen Elektrolyseur, Elektrolyseur und Verfahren zur Herstellung einer Bipolarplatte**
Bipolar plate for an electrolyser, electrolyser and method for producing a bipolar plate
Plaque bipolaire pour un électrolyseur, électrolyseur et procédé de fabrication d'une plaque bipolaire

(43) Veröffentlichungstag der Anmeldung: 14.05.2014
(73) Patentinhaber: Siemens Aktiengesellschaft, 80333 München (DE)
(72) Erfinder: Hahn, Alexander, 91341 Röttenbach (DE); Spies, Alexander, 90762 Fürth (DE); Straub, Jochen, 91054 Erlangen (DE)

(56) Entgegenhaltungen:
- EP-A1- 2 065 958
- EP-A1- 2 141 264
- WO-A1-97/50139
- DE-A1- 10 025 207
- US-A1- 2003 143 451
- US-A1- 2011 033 767

## Beschreibung

Die Erfindung betrifft eine Bipolarplatte für einen Elektrolyseur, insbesondere einen PEM-Elektrolyseur, umfassend einen zentralen Bereich sowie einen den zentralen Bereich umschließenden Randbereich. Die Erfindung betrifft weiterhin einen Elektrolyseur, insbesondere einen PEM-Elektrolyseur, umfassend mindestens eine solche Bipolarplatte. Die Erfindung betrifft zudem ein Verfahren zum Herstellen einer solchen Bipolarplatte.

Elektrochemische Zellen sind allgemein bekannt und werden unterteilt in galvanische Zellen und Elektrolysezellen. Eine Elektrolysezelle ist eine Vorrichtung, bei der ein elektrischer Strom eine chemische Reaktion erzwingt, wobei zumindest ein Teil von elektrischer Energie in chemische Energie umgewandelt wird. Eine galvanische Zelle ist eine - zur Elektrolysezelle - komplementäre Vorrichtung zur spontanen Umwandlung von chemischer in elektrische Energie. Eine bekannte Vorrichtung einer solchen galvanischen Zelle ist z.B. eine Brennstoffzelle.

Die Spaltung von Wasser durch elektrischen Strom zur Produktion von Wasserstoff- und Sauerstoffgas mittels einer Elektrolysezelle ist hinlänglich bekannt. Es wird dabei hauptsächlich zwischen zwei technischen Systemen, der alkalischen Elektrolyse und der PEM(Proton-Exchange-Membrane)-Elektrolyse, unterschieden.

Das Kernstück einer technischen Elektrolyseanlage ist die Elektrolysezelle umfassend zwei Elektroden und einen Elektrolyten. In einer PEM-Elektrolysezelle besteht der Elektrolyt aus einer protonenleitenden Membran, auf welcher sich beidseitig die Elektroden befinden. Die Einheit aus Membran und Elektroden wird als MEA (engl. Membrane-Electrode-Assembly, dt. Membran-Elektroden-Einheit) bezeichnet. Die Elektroden werden im zusammengebauten Zustand eines Elektrolyse-Stacks aus mehreren Elektrolysezellen über eine Gasdiffusionsschicht von so genannten Bipolarplatten kontaktiert, wobei die Bipolarplatten die einzelnen Elektrolysezellen des Stacks voneinander trennen. Dabei entspricht die O₂-Seite der Elektrolysezelle dem Pluspol und die H₂-Seite dem Minuspol, getrennt durch die dazwischen liegende Membran-Elektroden-Einheit.

Die PEM-Elektrolysezelle wird auf der O₂-Seite mit voll entsalztem Wasser gespeist, das an der Anode in Sauerstoffgas und Protonen (H⁺) zerlegt. Die Protonen wandern durch die Elektrolytmembran und rekombinieren auf der H₂-Seite zu Wasserstoffgas. Die an den Elektroden anliegende Gasdiffusionsschicht gewährleistet bei diesem Prozess die optimale Wasserverteilung (und damit die Benetzung der Membran) sowie den Abtransport der Produktgase.

Prinzipiell können die Elektrolysezellen unter Druck oder drucklos betrieben werden. Ein zusätzlicher Innendruck hat bei der späteren Speicherung der Produktgase Vorteile und beeinträchtigt den Wirkungsgrad der Elektrolysezelle nahezu nicht.

Eine wichtige Aufgabe bei der Konstruktion der beschriebenen Elektrolysezellen besteht in der Auswahl der für die Bipolarplatte verwendeten Materialien. Die Betriebsbedingungen stellen korrosionstechnisch hohe Anforderungen an die eingesetzten Materialien. Neben der hohen Betriebstemperatur bis 120°C und Innendrücken der Elektrolysezellen bis 50 bar, werden die Materialien der Bipolarplatte auf der H₂-Seite stark reduzierenden und auf der O₂-Seite stark oxidierenden Bedingungen ausgesetzt, zusätzlich liegen sie dabei auf negativen bzw. positiven elektrischen Potentialen. Zum anderen haben die Bipolarplatten außerhalb der Elektroden bzw. der zugeordneten Gasdiffusionsschicht direkten Kontakt zur Membran. Dies ist aufgrund der stark saueren Oberfläche der Membran (sulfonierte Teflonpolymere, z.B. Nafion) eine weitere Herausforderung im Hinblick auf die Korrosionsbeständigkeit. Die Bipolarplatten, die heutzutage verwendet werden, sind daher in der Regel aus Titan oder Edelstahl. Zumeist handelt es sich um massive Pressteile oder tiefgezogene Bleche aus den oben genannten Werkstoffen. Auf der positiven Seite (O₂-Seite) wird aufgrund des ausgeprägten Passivierungsbereichs meist Reintitan verwendet. Allerdings ist auch Reintitan ohne entsprechende Beschichtung auf der negativen Seite (H₂-Seite) nicht stabil und korrodiert.

Zusätzlich zu den anspruchsvollen Einsatzbedingungen stellt die spätere Montage des Elektrolyse-Stacks hohe Anforderungen an die Maßgenauigkeit der Bipolarplatten. Um in einen Stack bestehend aus über hundert Einzelzellen zuverlässig zu dichten, sind nur sehr geringe Fertigungstoleranzen an den Bipolarplatten zulässig.

Somit ergibt sich, dass aufgrund der korrosiven Anforderungen sehr kostenintensive Materialien (Reintitan, hochwertiger Edelstahl) zum Einsatz kommen und aufgrund der geringen Fertigungstoleranzen sehr aufwendige Fertigungsverfahren (oft massive gefräste Platten) für die Bipolarplatten eingesetzt werden. Sie stellen somit neben der Membran-Elektroden-Einheit den größten Kostenfaktor in einem Elektrolysestapel dar.

Aus der Patentschrift EP 2 201 157 B1 ist eine Bipolarplatte für einen PEM-Elektrolyseur bekannt, die einen zentralen Bereich und einen den zentralen Bereich umschließenden Randbereich aufweist. Sowohl der zentrale Bereich als auch der Randbereich ist aus Kunststoff ausgebildet. Der zentrale Bereich weist ein Strömungsfeld aus mehreren Strömungskanälen auf. Der zentrale Bereich ist entweder aus einem leitenden Polymer ausgebildet oder aus einem nichtleitfähigen Kunststoff, der ein Grundmaterial darstellt, in dem leitende Elemente nach Art von Kontaktstiften oder trapezförmig verlaufenden Blechen eingebettet sind. Durch das Integrieren von separaten leitenden Elementen im zentralen Bereich ist die Herstellung von einer derartigen Bipolarplatte aufwendig und entsprechend teuer. Außerdem benötigen die Bipolarplatten einen zusätzlichen Stromverteiler in der Größe der Elektroden, um die gesamte Elektrodenfläche gleichmäßig zu kontaktieren.

Der Erfindung liegt die Aufgabe zugrunde, eine Bipolarplatte anzugeben, welche den Korrosionsanforderungen entspricht und dabei einfach und kostengünstig herzustellen ist.

Die Aufgabe wird erfindungsgemäß gelöst durch eine Bipolarplatte für einen Elektrolyseur, insbesondere einen PEM-Elektrolyseur, umfassend einen zentralen Bereich sowie einen den zentralen Bereich umschließenden Randbereich, wobei der zentrale Bereich aus einem metallischen Blech besteht und der Randbereich durch einen Kunststoffrahmen gebildet ist, wobei zwischen Verteilungskanälen (8a, 8b, 8c, 8d) zur Erzielung einer höheren Steifigkeit und Festigkeit des Kunststoffrahmens (6) mehrere Verrippungen (10) vorgesehen sind.

Die Aufgabe wird weiterhin erfindungsgemäß gelöst durch einen Elektrolyseur, insbesondere PEM-Elektrolyseur, umfassend mindestens eine solche Bipolarplatte.

Die Aufgabe wird weiterhin erfindungsgemäß gelöst durch ein Verfahren zum Herstellen einer solchen Bipolarplatte, bei dem
- das metallische Blech gefertigt wird,
- der Kunststoffrahmen hergestellt wird, wobei
- nach der Herstellung des Kunststoffrahmens oder gleichzeitig mit der Herstellung des Kunststoffrahmens das metallische Blech und der Kunststoffrahmen miteinander verbunden werden.

Die Erfindung basiert auf der Idee, dass aufgrund der unterschiedlichen Funktionen des zentralen Bereichs und des Randbereichs der Bipolarplatte diese Bereiche aus separaten Bauteilen bestehen können, die erst bei der Fertigung der Bipolarplatte zusammengeführt werden. Da die verschiedenen Bereiche der Bipolarplatten zunächst getrennte Bauteile sind, wer den auch verschiedene Materialien für den jeweiligen Bereich gewählt, die für die Erfüllung der Funktion dieses Bereichs bestens geeignet sind.

So wird der zentrale Bereich aus einem einfachen, insbesondere ebenen metallischen Blech gebildet, welches die elektrische Leitfähigkeit des zentralen Bereichs bestens gewährleistet und zudem besonders einfach zu fertigen ist.

Der Randbereich ist wiederum ein insbesondere elektrisch nicht leitendes Spritzgussteil aus Kunststoff. Der Spritzgussprozess für die Herstellung des Kunststoffrahmens hat wesentliche Vorteile hinsichtlich der Formgebung des Kunststoffrahmens (bspw. das Einbringen von Bohrungen oder Nuten), ist deutlich flexibler und vor allem im Bereich hoher Stückzahlen deutlich kostengünstiger als herkömmliche Metallbearbeitungsverfahren. Aus Konstruktions- und Stabilitätsgründen weist der Kunststoffrahmen bevorzugt Verrippungen auf, die insbesondere in der Fläche zwischen den Verteilungskanälen ausgebildet sind.

Das Blech ist insbesondere eine rechteckige Platte mit einer Dicke von wenigen Millimetern, z.B. 1 bis 2 mm, deren Oberfläche, die mit der Membran-Elektroden-Einheit in Kontakt kommt, keine Profilstruktur aufweist. In diesem Fall wird das Strömungsfeld insbesondere durch leitfähige, profilierte Einlegeteile realisiert. Die profilierten Einlegeteile stellen sowohl die Kanalstruktur als auch die Gasdiffusionsschicht dar, so dass durch diese Kombination kein zusätzlicher Stromverteiler notwendig ist.

Ein wesentlicher Unterschied der oben beschriebenen Bipolarplatte im Vergleich zu der Bipolarplatte gemäß EP 2 201 157 B1 ist, dass der zentrale Bereich, der elektrisch leitend ist, vollständig aus Metall ausgebildet ist und keinen Kunststoff aufweist. Das Blech lässt sich somit in einfache Geometrien wie z.B. eine rechteckige Platte ausgestalten. Im Gegensatz zur Kunststoff-Bipolarplatte aus dem Stand der Technik ist der Kunststoffrahmen der oben beschriebenen Bipolarplatte ein separates Bauelement, so dass die Herstellung des Blechs unabhängig von der Herstellung des Kunststoffrahmens erfolgt.

Gemäß einer bevorzugten Ausgestaltung ist der Kunststoffrahmen um das Blech umspritzt. In diesem Fall liegt zunächst das fertige Blech vor und es wird für die Herstellung des Kunststoffrahmens herangezogen. Mit der Herstellung des Kunststoffrahmens werden das Blech und der Kunststoffrahmen insbesondere unlösbar miteinander verbunden, so dass der zentrale Bereich und der Randbereich der fertigen Bipolarplatte eine einzige, untrennbare Einheit bilden. Diese Ausgestaltung der Bipolarplatte zeichnet sich dadurch aus, dass sehr wenige Herstellungsschritte erforderlich sind.

Gemäß einer weiteren alternativen Ausgestaltung ist der Kunststoffrahmen aus mindestens zwei Halbschalen gebildet, die durch eine Kraft-, Form- oder stoffschlüssige Verbindung mediendicht miteinander verbunden sind. Zunächst liegen das fertige Blech und der zwei- oder mehrteilige Kunststoffrahmen vor, wobei die Reihenfolge der Herstellung dieser Bauteile der Bipolarplatte unwesentlich ist. Erst nach der Herstellung des Kunststoffrahmens können hierbei der Kunststoffrahmen und das metallische Blech zusammengefügt werden, um die Bipolarplatte auszubilden. Bei einer derartigen Ausgestaltung kann die Bipolarplatte an einem anderen Ort als an dem Herstellungsort des Kunststoffrahmens zusammengesetzt werden. Der Kunststoffrahmen, der in diesem Fall zwei- oder mehrteilig ist, kann zu einem späteren Zeitpunkt mit dem metallischen Blech fluiddicht verschraubt, verclipst, verschweißt oder verklebt werden.

Bevorzugt sind lediglich im Kunststoffrahmen Verteilungskanäle für Betriebsmedien integriert. Unter Verteilungskanäle werden hierbei Zu- und Abläufe für die Betriebsmedien Wasser, Sauerstoff und Wasserstoff verstanden. Insbesondere ist die komplette Peripherie des Elektrolyse-Stacks, umfassend z.B. die Wasserversorgungskanäle längs des Elektrolyse-Stacks und die Zuläufe zu den einzelnen Zellen sowie Dichtungselemente, im Kunststoffrahmen integriert. Dies ist besonders vorteilhaft im Hinblick auf die einfache Formgebung des Kunststoffrahmens. Da die gesamte Profilstruktur der Bipolarplatte im Bereich des Kunststoffrahmens ausgeführt ist, kann das metallische Blech eine besonders einfache Form aufweisen, insbesondere sind im metallischen Blech keine Aussparungen für die Verteilungskanäle sowie keine weiteren Profilelemente vorgesehen - das Blech ist flach und weist eine glatte Oberfläche auf. Die Vorteile des Spritzgussprozesses als Formgebungsverfahren gelten dabei sowohl für ein direkt umspritztes Blech, als auch für das separate Spritzen von zwei Halbschalen, in welche das Blech eingelegt wird.

Nach einer bevorzugten Ausgestaltung ist im Kunststoffrahmen mindestens eine Nut zum Einlegen einer Dichtung vorgesehen. Die Nut erstreckt sich zweckdienlicherweise zumindest um den zentralen Bereich. Alternativ werden der zentrale Bereich und mindestens einer oder mehrere der Verteilungskanäle durch eine einzige durchgehende Dichtung abgedichtet, die in der entsprechend geformten Nut eingelegt ist. Alternativ sind die Verteilungskanäle separat abgedichtet.

Alternativ oder ergänzend ist am Kunststoffrahmen bevorzugt eine Dichtung angespritzt, so dass die Dichtung ein integraler Bestandteil des Kunststoffrahmens ist. Mit den heutigen Spritztechniken ist es möglich, den Kunststoffrahmen und die darin integrierten Dichtungen aus einem anderen Material in nur einem Schritt herzustellen. Die Zeit zum Fertigen der gesamten Bipolarplatte wird somit kürzer. Für die Dichtung ist hierbei insbesondere ein im Vergleich zum restlichen Rahmen elastischer Kunststoff vorgesehen.

Um die hohen Anforderungen an die Korrosions- und Temperaturbeständigkeit zu erfüllen, enthält der Kunststoffrahmen vorzugsweise mindestens einen Thermoplast, insbesondere mindestens einen Hochtemperatur-Thermoplast, wie z.B. Polyetheretherketon (PEEK), Polyphenylensulfid (PPS), Polysulfon (PSU), Polyethersulfon (PES), Polyetherimid (PEI), aromatisches Polyamid (PA6/6T), etc..

Nach einer bevorzugten Ausgestaltung enthält der Kunststoffrahmen mehrere Kunststoffsorten. Die einzelnen Bereiche des Kunststoffrahmens können, je nach Materialanforderungen, aus unterschiedlichen Polymeren aufgebaut sein (Mehrkomponentenspritzguss, Sandwichstruktur). Beispielsweise werden Bereiche, die in direktem Kontakt mit der Membran-Elektroden-Einheit stehen, aus sehr gut beständigem PEEK oder PPS ausgeführt und andere, mechanisch nicht so stark belastete Teile des Kunststoffrahmens werden aus kostengünstigeren Kunststoffen gespritzt.

Das Blech ist zweckdienlicherweise aus Titan und/oder Edelstahl ausgebildet.

Durch die Verwendung eines Kunststoffrahmens ist die Korrosionsproblematik der Bipolarplatten minimiert. Die Metallteile der Bipolarplatte haben keinen direkten Kontakt zur Membran und sind somit nicht der stark sauren Oberfläche ausgesetzt. Die Membran kontaktiert lediglich den Kunststoffrahmen. Aus diesem Grund sind für den Kunststoffrahmen Kunststoffe mit ausreichender Chemikalienbeständigkeit (bspw. PEEK, PPS) gewählt.

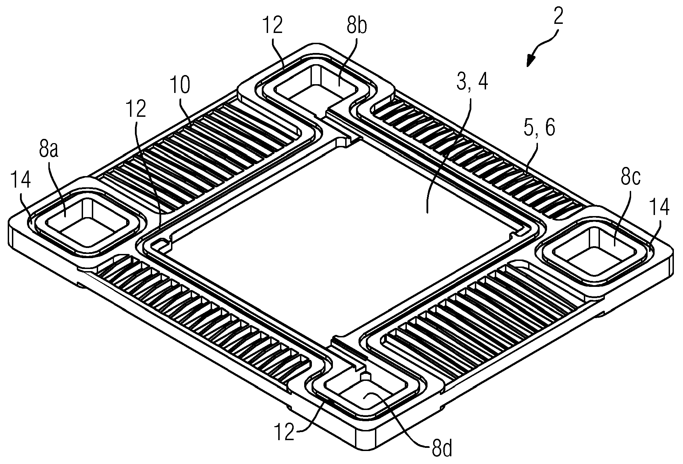

Ein Ausführungsbeispiel der Erfindung wird anhand einer Zeichnung näher erläutert. Hierin zeigt die einzige Figur eine Bipolarplatte 2 für eine Elektrolysezelle eines nicht näher gezeigten PEM-Elektrolyseurs, Die Bipolarplatte 2 umfasst einen zentralen Bereich 3 aus einem metallischen Blech 4, sowie einen Randbereich 5, der durch einen Kunststoffrahmen 6 gebildet ist. Im gezeigten Ausführungsbeispiel wurde die Bipolarplatte 2 hergestellt, indem der Kunststoffrahmen 6 um das fertige Blech 4 gespritzt wurde und auf diese Weise eine unlösbare Verbindung zwischen dem Blech 4 und dem Kunststoffrahmen 6 geschaffen wurde. Alternativ ist es jedoch auch möglich, dass zunächst in einer Spritzgussform zwei Halbschalen für den Kunststoffrahmen 6 gegossen werden, die anschließend mit dem metallischen Blech 4 verbunden werden.

Der zentrale Bereich 3 wird dadurch definiert, dass im Betrieb dieser Bereich in keinem direkten Kontakt mit der Membran der Membran-Elektroden-Einheit steht. Der Randbereich ist der Bereich der Bipolarplatte 2, der den zentralen Bereich umschließt und teilweise direkt auf einer Polymer-Elektrolyt-Membran (PEM) aufliegt.

Das Blech 4 ist eine flache Platte bestehend ausschließlich aus Titan oder Edelstahl, die beidseitig eine ebene, glatte Oberfläche aufweist. Das Blech 4 weist eine Dicke in der Größenordnung von wenigen Millimetern auf, insbesondere 1 bis 2 mm. Die Größe des Blechs 4 entspricht im Wesentlichen der Größe der aktiven Elektrodenfläche einer hier nicht näher gezeigten Membrane-Elektroden-Einheit. Die Größe des Blechs 4 ist derart gewählt, dass im zusammengebauten Zustand der Elektrolysezelle das Blech 4 lediglich indirekt, über eine Gasdiffusionsschicht eine der Elektroden kontaktiert. Ein direkter Kontakt zwischen dem metallischen Blech 4 und der stark sauren Oberfläche der Membran der Membrane-Elektroden-Einheit liegt im zusammengebauten Zustand der Elektrolysezelle bzw. des PEM-Elektrolyseurs nicht vor.

Im zusammengebauten Zustand des PEM-Elektrolyseurs kann die in der Figur gezeigte Bipolarplatte 2 durch zusätzliche Kontakt-, Verteilungs-, Stütz- und/oder Verstärkungselemente ergänzt werden, um eine stabile Konstruktion und einen störungsfreien Betrieb des Elektrolyseurs zu ermöglichen.

Im Gegensatz zum metallischen Blech 4 weist der Kunststoffrahmen 6 eine stark profilierte Oberfläche auf. In den Ecken des Kunststoffrahmens 6 sind Verteilungskanäle 8a, 8b, 8c und 8d für die Zuleitung von Wasser und die Ableitung der in der Elektrolysezelle erzeugten Gase Sauerstoff und Wasserstoff vorgesehen. Zwischen den Verteilungskanälen 8a, 8b, 8c und 8d sind zur Erzielung einer höheren Steifigkeit und Festigkeit des Kunststoffrahmens 6 mehrere Verrippungen vorgesehen. Darüber hinaus ist um den zentralen Bereich eine Nut 12 zur Aufnahme einer Einlegedichtung ausgebildet. Im gezeigten Ausführungsbeispiel verläuft die Nut 12 (mit kurzen Unterbrechungen) zudem um die Verteilungskanäle 8b, 8d, so dass das Blech 4 sowie die Verteilungskanäle 8b und 8d durch eine einzige ringförmige Dichtung abgedichtet werden. Um die Verteilungskanäle 8a, 8c sind separate Nuten 14 vorgesehen, so dass die Dichtungen, die in diese Nuten 14 eingelegt werden, lediglich den jeweiligen Verteilungskanal 8a, 8c abdichten. Alternativ erstreckt sich eine zentrale Dichtung um den zentralen Bereich und die Verteilungskanäle 8a, 8b, 8c, 8d werden einzeln abgedichtet.

Der Kunststoffrahmen 6 ist aus mindestens einem Thermoplast, insbesondere aus einem Hochtemperatur-Thermoplast, wie z.B. PEEK oder PPS ausgebildet. In Abhängigkeit von den Anforderungen an die verschiedenen Funktionsbereiche des Kunststoffrahmens 6, kann dieser zudem auch aus verschiedenen Kunststoffen ausgebildet sein. Die Funktionsbereiche, die einer hohen mechanischen Beanspruchung ausgesetzt sind, z.B. die Verteilungskanäle 8a, 8b, 8c und 8d, können auch durch zusätzlich Elemente, z.B. Einlegelemente aus Metall oder Kunststoff verstärkt werden.

Die oben beschriebene Bipolarplatte 2 zeichnet sich an erster Stelle durch ihre kostengünstige Herstellung aus. Aus dem teuren Material Titan bzw. Edelstahl wird lediglich das flache Blech 4 hergestellt. Der Rest der Bipolarplatte 2 wird aus günstigerem Kunststoff hergestellt. Da das Fertigungsverfahren für den Kunststoffrahmen 6 große Freiheiten in Bezug auf die Formgebung des Kunststoffrahmens 6 erlaubt, lässt sich somit die gezeigte Bipolarplatte 2 einfach und in wenigen Schritten herstellen.

## Patentansprüche

1. Bipolarplatte (2)für einen Elektrolyseur, insbesondere einen PEM-Elektrolyseur, umfassend einen zentralen Bereich (3) sowie einen den zentralen Bereich (3) umschließenden Randbereich (5),
**dadurch gekennzeichnet, dass** der zentrale Bereich (3) aus einem metallischen Blech (4) besteht und der Randbereich (5) durch einen Kunststoffrahmen (6) gebildet ist, wobei zwischen Verteilungskanälen (8a, 8b, 8c, 8d) zur Erzielung einer höheren Steifigkeit und Festigkeit des Kunststoffrahmens (6) mehrere Verrippungen (10) vorgesehen sind.

2. Bipolarplatte (2) nach Anspruch 1,
**dadurch gekennzeichnet, dass** der Kunststoffrahmen (6) um das Blech (4) umspritzt ist.

3. Bipolarplatte (2) nach Anspruch 1 oder 2,
**dadurch gekennzeichnet, dass** der Kunststoffrahmen (6) aus mindestens zwei Halbschalen gebildet ist, die mediendicht miteinander verbunden sind.

4. Bipolarplatte (2) nach einem der vorhergehenden Ansprüche,
**dadurch gekennzeichnet, dass** lediglich im Kunststoffrahmen (6) Verteilungskanäle (8a, 8b, 8c, 8d) für Betriebsmedien integriert sind.

5. Bipolarplatte (2) nach einem der vorhergehenden Ansprüche,
**dadurch gekennzeichnet, dass** im Kunststoffrahmen (6) mindestens eine Nut (12, 14) zum Einlegen einer Dichtung vorgesehen ist.

6. Bipolarplatte (2) nach einem der vorhergehenden Ansprüche,
**dadurch gekennzeichnet, dass** am Kunststoffrahmen (6) eine Dichtung angespritzt ist.

7. Bipolarplatte (2) nach einem der vorhergehenden Ansprüche,
**dadurch gekennzeichnet, dass** der Kunststoffrahmen (6) aus mindestens einem Thermoplast, insbesondere aus mindestens einem Hochtemperatur-Thermoplast ausgebildet ist.

8. Bipolarplatte (2) nach Anspruch 7,
**dadurch gekennzeichnet, dass** der Kunststoffrahmen (6) mehrere Kunststoffsorten enthält.

9. Bipolarplatte (2) nach einem der vorhergehenden Ansprüche,
**dadurch gekennzeichnet, dass** das Blech (4) aus Titan und/oder Edelstahl ausgebildet ist.

10. Elektrolyseur, insbesondere PEM-Elektrolyseur, umfassend mindestens eine Bipolarplatte (2) nach einem der vorhergehenden Ansprüche.

11. Verfahren zum Herstellen einer Bipolarplatte (2) nach einem der Ansprüche 1 bis 9, bei dem
- das metallische Blech (4) gefertigt wird,
- der Kunststoffrahmen (6) hergestellt wird, wobei
- nach der Herstellung des Kunststoffrahmens (6) oder gleichzeitig mit der Herstellung des Kunststoffrahmens (6) das metallische Blech (4) und der Kunststoffrahmen (6) miteinander verbunden werden.

## Claims

1. Bipolar plate (2) for an electrolyser, especially a PEM electrolyser, comprising a central region (3) and also a peripheral region (5) surrounding the central region (3),
**characterised in that** the central region (3) consists of a metallic sheet (4) and the peripheral region (5) is formed by a plastic frame (6), wherein a number of rib elements (10) are provided between the distribution channels (8a, 8b, 8c, 8d) to achieve greater rigidity and strength of the plastic frame (6) .

2. Bipolar plate (2) according to claim 1,
**characterised in that** the plastic frame (6) is moulded around the sheet (4).

3. Bipolar plate (2) according to claim 1 or 2,
**characterised in that** the plastic frame (6) is formed of at least two half shells connected to one another in a media-tight manner.

4. Bipolar plate (2) according to one of the preceding claims,
**characterised in that** distribution channels (8a, 8b, 8c, 8d) for operating media are only integrated into the plastic frame (6) .

5. Bipolar plate (2) according to one of the preceding claims,
**characterised in that** at least one groove (12, 14) for insertion of a seal is provided in the plastic frame (6).

6. Bipolar plate (2) according to one of the preceding claims,
**characterised in that** a seal is moulded onto the plastic frame (6) .

7. Bipolar plate (2) according to one of the preceding claims,
**characterised in that** the plastic frame (6) is embodied from at least one thermoplastic, especially from at least one high-temperature thermoplastic.

8. Bipolar plate (2) according to claim 7, **characterised in that** the plastic frame (6) contains a number of types of plastic.

9. Bipolar plate (2) according to one of the preceding claims,
**characterised in that** the sheet (4) is embodied from titanium and/or stainless steel.

10. Electrolyser, especially a PEM electrolyser, comprising at least one bipolar plate (2) according to one of the preceding claims.

11. Method for producing a bipolar plate (2) according to one of claims 1 to 9, in which
- the metallic sheet (4) is produced,
- the plastic frame (6) is manufactured, wherein
- after the manufacture of the plastic frame (6) or at the same time as the manufacture of the plastic frame (6), the metallic sheet (4) and the plastic frame (6) are connected to one another.

## Revendications

1. Plaque ( 2 ) bipolaire pour un électrolyseur, notamment pour un électrolyseur PEM, comprenant une région ( 3 ) centrale ainsi qu'une région ( 5 ) de bord entourant la région ( 3 ) centrale,
**caractérisé en ce que** la région ( 3 ) centrale est en une tôle métallique et la région ( 5 ) de bord est formée d'un cadre ( 6 ) en matière plastique, plusieurs nervurages ( 10 ) étant prévus entre des canaux ( 8a, 8b, 8c, 8d ) de répartition pour obtenir une rigidité et une solidité plus grande du cadre ( 6 ) en matière plastique.

2. Plaque ( 2 ) bipolaire suivant la revendication 1,
**caractérisée en ce que** le cadre ( 6 ) en matière plastique est extrudé autour de la tôle ( 4 ).

3. Plaque ( 2 ) bipolaire suivant la revendication 1 ou 2,
**caractérisée en ce que** le cadre ( 6 ) en matière plastique est formé d'au moins deux hémicoquilles qui sont reliées entre elles d'une manière étanche au fluide.

4. Plaque ( 2 ) bipolaire suivant l'une des revendications précédentes,
**caractérisée en ce que** des canaux ( 8a, 8b, 8c, 8d ) de répartition pour des fluides de fonctionnement sont intégrés seulement dans le cadre ( 6 ) en matière plastique.

5. Plaque ( 2 ) bipolaire suivant l'une des revendications précédentes,
**caractérisée en ce qu'**il est prévu au moins une rainure ( 12, 14 ) d'insertion d'une garniture d'étanchéité dans le cadre ( 6 ) en matière plastique.

6. Plaque ( 2 ) bipolaire suivant l'une des revendications précédentes,
**caractérisée en ce qu'**une garniture d'étanchéité est injectée dans le cadre ( 6 ) en matière plastique.

7. Plaque ( 2 ) bipolaire suivant l'une des revendications précédentes,
**caractérisée en ce que** le cadre ( 6 ) en matière plastique est en au moins une matière thermoplastique, notamment en au moins une matière thermoplastique pour les hautes températures.

8. Plaque ( 2 ) bipolaire suivant la revendication 7,
**caractérisée en ce que** le cadre ( 6 ) en matière plastique contient plusieurs sortes de matière plastique.

9. Plaque ( 2 ) bipolaire suivant l'une des revendications précédentes,
**caractérisée en ce que** la tôle ( 4 ) est en titane ou en acier fin.

10. Electrolyseur, notamment électrolyseur PEM, comprenant au moins une plaque ( 2 ) bipolaire suivant l'une des revendications précédentes.

11. Procédé de fabrication d'une plaque ( 2 ) bipolaire suivant l'une des revendications 1 à 9, dans lequel
- on fabrique une tôle ( 4 ) métallique,
- on produit un cadre ( 6 ) en matière plastique, dans lequel
- après la production du cadre ( 6 ) en matière plastique ou en même temps que l'on produit le cadre ( 6 ) en matière plastique, on relie entre eux la tôle ( 4 ) métallique et le cadre ( 6 ) en matière plastique.
